(19) Europäisches Patentamt
European Patent Office
Office européen des brevets

(11) **EP 3 238 144 B1**

(12) **EUROPEAN PATENT SPECIFICATION**

(45) Date of publication and mention
of the grant of the patent:
**14.04.2021 Bulletin 2021/15**

(51) Int Cl.:
***G06N 3/04*** (2006.01)

(21) Application number: **15826103.2**

(22) Date of filing: **21.12.2015**

(86) International application number:
**PCT/US2015/067159**

(87) International publication number:
**WO 2016/106238 (30.06.2016 Gazette 2016/26)**

(54) **AUGMENTING NEURAL NETWORKS TO GENERATE ADDITIONAL OUTPUTS**

ERWEITERN NEURONALER NETZE ZUR ERZEUGUNG ZUSÄTZLICHER AUSGABEN

AUGMENTATION DES RÉSEAUX NEURONALS À LA PRODUCTION DES FLUX SORTANTS ADDITIONELS

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **24.12.2014 US 201462096716 P**

(43) Date of publication of application:
**01.11.2017 Bulletin 2017/44**

(73) Proprietor: **DeepMind Technologies Limited
London
EC4A 3TW (GB)**

(72) Inventors:
• **GRAVES, Alexander Benjamin**
**London SW1W 9TQ (GB)**
• **DANIHELKA, Ivo**
**London SW1W 9TQ (GB)**
• **WAYNE, Gregory Duncan**
**London SW1W 9TQ (GB)**

(74) Representative: **Robinson, David Edward
Ashdown
Marks & Clerk LLP
1 New York Street
Manchester M1 4HD (GB)**

(56) References cited:
• Alex Graves: "Sequence Transduction with Recurrent Neural Networks", , 14 November 2012 (2012-11-14), pages 1-9, XP055247437, Retrieved from the Internet: URL:http://arxiv.org/pdf/1211.3711.pdf [retrieved on 2016-02-04]
• Sreerupa Das ET AL: "Learning Context-free Grammars: Capabilities and Limitations of a Recurrent Neural Network with an External Stack Memory", Advances in Neural Information Processing Systems 5., 1 January 1993 (1993-01-01), XP055239425, Retrieved from the Internet: URL:http://citeseerx.ist.psu.edu/viewdoc/download?doi=10.1.1.54.730&rep=rep1&type=pdf [retrieved on 2016-01-07]
• Karol Gregor ET AL: "Deep AutoRegressive Networks", , 20 May 2014 (2014-05-20), pages 1-9, XP055261759, Retrieved from the Internet: URL:http://arxiv.org/pdf/1310.8499v2.pdf [retrieved on 2016-03-31]
• Alex Graves: "Generating Sequences With Recurrent Neural Networks", , 4 August 2013 (2013-08-04), XP055227715, Retrieved from the Internet: URL:http://arxiv.org/pdf/1308.0850v1.pdf [retrieved on 2015-11-11]
• GRAVES ALEX ET AL: "Speech recognition with deep recurrent neural networks", 2013 IEEE INTERNATIONAL CONFERENCE ON ACOUSTICS, SPEECH AND SIGNAL PROCESSING (ICASSP); VANCOUCER, BC; 26-31 MAY 2013, INSTITUTE OF ELECTRICAL AND ELECTRONICS ENGINEERS, PISCATAWAY, NJ, US, 26 May 2013 (2013-05-26), pages 6645-6649, XP032508511, ISSN: 1520-6149, DOI: 10.1109/ICASSP.2013.6638947 [retrieved on 2013-10-18]

- Armand Joulin ET AL: "Inferring Algorithmic Patterns with Stack-Augmented Recurrent Nets", , 1 June 2015 (2015-06-01), pages 1-10, XP055239416, Retrieved from the Internet: URL:http://arxiv.org/pdf/1503.01007.pdf [retrieved on 2016-01-07]

**Description**

BACKGROUND

This specification relates to neural network system architectures.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current values of a respective set of parameters.

Some neural networks are recurrent neural networks. A recurrent neural network is a neural network that receives an input sequence and generates an output sequence from the input sequence. In particular, a recurrent neural network can use some or all of the internal state of the network from a previous time step in computing an output at a current time step. An example of a recurrent neural network is a Long Short-Term Memory (LSTM) neural network that includes one or more LSTM memory blocks. Each LSTM memory block can include one or more cells that each include an input gate, a forget gate, and an output gate that allow the cell to store previous states for the cell, e.g., for use in generating a current activation or to be provided to other components of the LSTM neural network. Alex Graves: "Sequence Transduction with Recurrent Neural Networks", 14 November 2012, describes an end-to-end, probabilistic sequence transduction system, based entirely on RNNs, that is in principle able to transform any input sequence into any finite, discrete output sequence.

SUMMARY

This specification describes technologies that relate to augmented neural network systems. In general, an augmented neural network system includes a neural network configured to receive neural network inputs and generate a respective neural network output for each neural network input. The augmented neural network system also includes a sequence processing subsystem that is configured to, for each of the system inputs in a sequence of system inputs, receive the system input and generate an initial neural network input from the system input. The sequence processing subsystem is also configured to cause the neural network to process the initial neural network input to generate an initial neural network output for the system input and to determine, from a first portion of the initial neural network output for the system input, whether or not to cause the neural network to generate one or more additional neural network outputs for the system input.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

The subject matter described in this specification can be implemented in particular examples so as to realize one or more of the following advantages. By allowing an augmented neural network system to determine when a final system output has been generated for a given system input, the performance of the neural network can be improved by allowing the neural network to generate more accurate outputs for difficult inputs. Additionally, the performance of the neural network is improved without significant increases in processing time needed for or computing resources used by the neural network, either during training or, after training, at run time. Additionally, the augmented neural network system is configured to signal when the output generated by the system is the final system output. By doing this, the system can be given time to accurately produce more complicated system outputs, e.g., to ensure that incomplete variable length outputs are not sent for further processing while still incomplete, improving the performance of the system.

The details of one or more examples of the subject matter of this specification are set forth in the accompanying drawings and the description below. Other features, aspects, and advantages of the subject matter will become apparent from the description, the drawings, and the claims.

BRIEF DESCRIPTION OF THE DRAWINGS

FIG. 1 shows an example augmented neural network system.
FIG. 2 is a flow diagram of an example process for generating a system output from a system input.
FIG. 3 is a flow diagram of an example process for generating one or more neural network outputs for a system input.
FIG. 4 is a flow diagram of an example process for generating a system output from a system input.

FIG. 5 is a flow diagram of an example process for determining memory access weights from a designated portion of a neural network output.

FIG. 6 is a flow diagram of an example process for generating content-based weights for locations in an external memory.

FIG. 7 is a flow diagram of an example process for applying a location-based adjustment to content-based weights.

FIG. 8 is a flow diagram of an example process for erasing from an external memory in accordance with erasing weights.

FIG. 9 is a flow diagram of an example process for writing to an external memory in accordance with writing weights.

FIG. 10 is a flow diagram of an example process for reading from an external memory in accordance with reading weights.

Like reference numbers and designations in the various drawings indicate like elements.

DETAILED DESCRIPTION

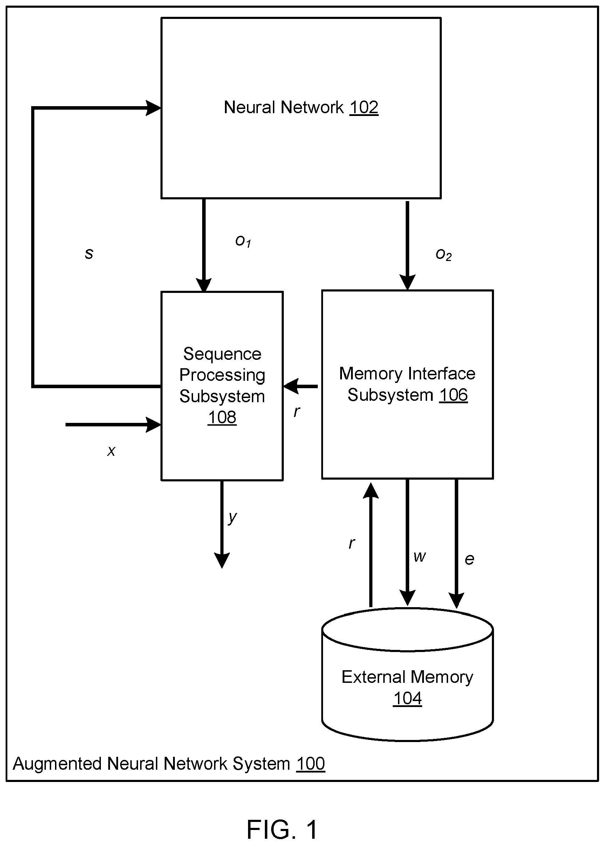

FIG. 1 shows an example augmented neural network system 100. The augmented neural network system 100 is an example of a system implemented as computer programs on one or more computers in one or more locations, in which the systems, components, and techniques described below are implemented.

The augmented neural network system 100 is a machine learning system that receives a sequence of system inputs and generates a sequence of system outputs from the system inputs. For example, the augmented neural network system 100 can receive a system input x as part of an input sequence and generate a system output y that is included in the sequence of system outputs. The augmented neural network system 100 can store the generated sequence of outputs in an output data repository or provide the sequence of outputs for use for some other immediate purpose.

The augmented neural network system 100 can be configured to receive any kind of digital data input and to generate any kind of score or classification output based on the input. For example, if the inputs to the augmented neural network system 100 are images or features that have been extracted from images, the output generated by the augmented neural network system 100 for a given image may be scores for each of a set of object categories, with each score representing an estimated likelihood that the image contains an image of an object belonging to the category.

As another example, the augmented neural network system 100 can be part of a reinforcement learning system.

In particular, the augmented neural network system 100 includes a neural network 102 and a sequence processing subsystem 108. The neural network 102 may be a feedfoward neural network or a recurrent neural network that is configured to receive a neural network input and process the neural network input to generate a neural network output.

The sequence processing subsystem 108 receives the system input x and generates a neural network input s from the system input x. The sequence processing subsystem 108 then causes the neural network 102 to process the neural network input s to generate a neural network output $o_1$ for the neural network input. Additionally, from each neural network input generated by the neural network 102, the sequence processing subsystem 108 determines whether to cause the neural network 102 to generate one or more additional neural network outputs for the current system input. The sequence processing subsystem 108 then determines, from each neural network output generated by the neural network 102 for the system input x, the system output y for the system input x.

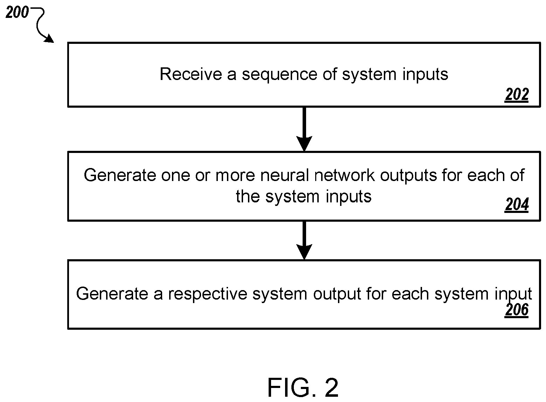

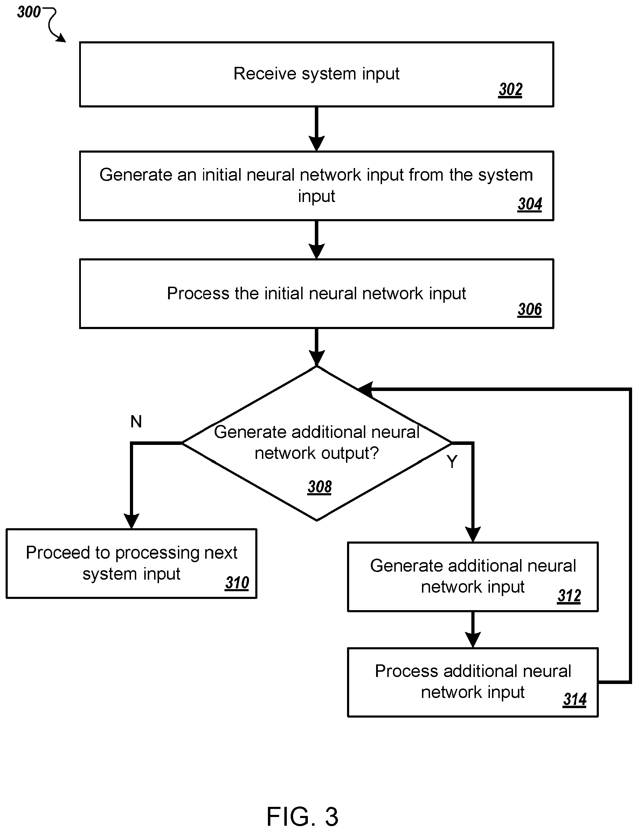

That is, the sequence processing subsystem 108 determines, from neural network outputs generated by the neural network 102 for a given system input, when to generate a final system output for the given system input and to provide a neural network input generated from the next system input to the neural network for processing. Processing a system input to generate a system output is described in more detail below with reference to FIG. 2. Determining whether to cause the neural network to generate additional neural network outputs for a given system input is described in more detail below with reference to FIG. 3.

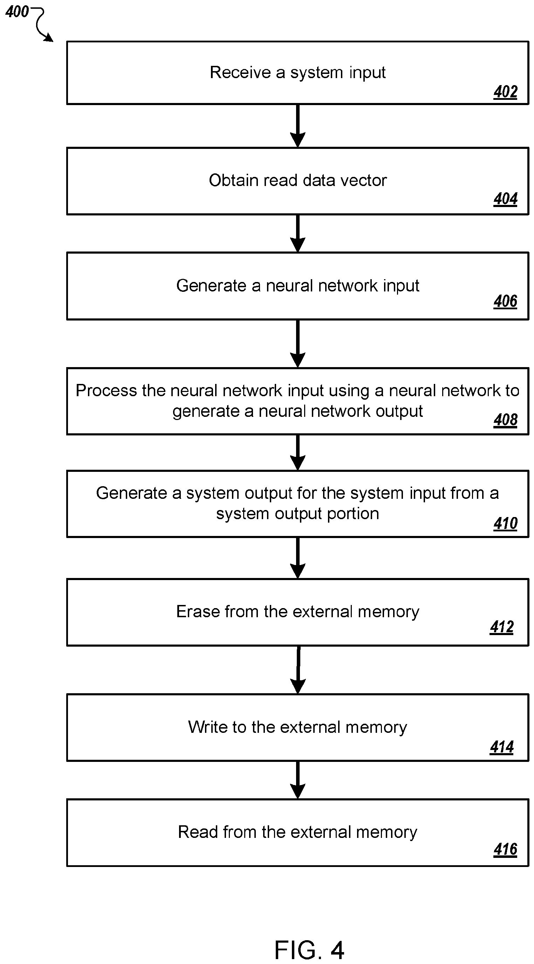

In some implementations, the neural network 102 is also augmented with an external memory 104 and a memory interface subsystem 106. In these implementations, the neural network 102 is configured to generate a neural network output that includes the output $o_1$ provided to the sequence processing system 108 and an output $o_2$ that is provided to the memory interface subsystem 106. The memory interface subsystem 106 receives the output $o_2$ generated by the neural network 102 and translates the received output into erase, read, and write operations to be performed on the external memory 104. That is, the memory interface subsystem 106 receives an output $o_2$ from the neural network 102 and, based on the output $o_2$, erases data e from the external memory 104, writes data w to the external memory 104, and reads data r from the external memory 104. The data r read by the memory interface subsystem 106 can then be provided to the sequence processing subsystem 108 for inclusion as a portion of a later neural network input, e.g., along with a system input. An augmented neural network system 102 that includes an external memory and a memory interface subsystem is described in more detail below with reference to FIGS. 4-10.

FIG. 2 is a flow diagram of an example process 200 for generating a system output from a system input. For convenience, the process 200 will be described as being performed by a system of one or more computers located in one or more locations. For example, an augmented neural network system, e.g., the augmented neural network system 100 of FIG. 1, appropriately programmed in accordance with this specification, can perform the process 200.

The system receives a sequence of system inputs (step 202).

The system generates one or more neural network outputs for each of the system inputs in the sequence (step 204). The system generates each of the neural network outputs by processing a respective neural network input using a neural network, e.g., the neural network 102 of FIG. 1, that is configured to process the neural network input to generate a neural network output from the neural network input.

Generally, for each system input, the system generates an initial neural network input from the system input and processes the initial neural network input using the neural network to generate an initial neural network output.

The system then determines, from a decision portion of the initial neural network output, whether another neural network output should be generated for the system input. The decision portion of the neural network output is a predetermined portion of the neural network output that has been designated, e.g., by a system administrator, as the portion of the neural network output to be used to make the determination of whether another neural network output should be generated, i.e., so that the same portion of the neural network output is used to make the determination for each output generated by the neural network. Generally, the decision portion of a given neural network output is a value at a predetermined position in the neural network output. As will be described further below, in some implementations, the neural network is configured so that the range of possible values for the decision portion is between zero and one, either inclusive or exclusive. Generating one or more neural network outputs for a system input is described in more detail below with reference to FIG. 3.

The system generates a respective system output for each system input from the neural network outputs for the system input (step 206). When only a single neural network output has been generated for a given system input, the system generates the system output for the system input from a system output portion of the single neural network output. The system output portion of the neural network output is a predetermined portion of the neural network output that is different from the decision portion and that has been designated, e.g., by a system administrator, as the portion to be used to generate the system output, i.e., so that the same portion of the neural network output is used to generate the system output for each output generated by the neural network.

In some implementations, the system provides the system output portion as the system output for the system input. In some other implementations, however, the system applies one or more transformations to the system output portion in order to generate the system output. For example, the system output portion may be transformed into a command to control a robot or a different digital interface.

When multiple neural network outputs have been generated for a given system input, the system can generate the system output for the system input in any of a variety of ways.

For example, the system can generate the system output from only the system output portion of the last neural network output that was generated for the system input. That is, the system discards all neural network outputs other than the last neural network output for the system input and then generates the system output from the last neural network output.

As another example, the system can generate the system output from the system output portions of all of the neural network outputs for the system input. In particular, the system can combine the system output portions of all of the neural network inputs to generate the system output. In some implementations, the system computes a weighted sum of the system output portions. That is, the system can multiply each system output portion by the value of the corresponding decision portion to generate a weighted system output portion and then sum the weighted system output portions to generate the system output. Optionally, the system normalizes the weighted sum, e.g., by dividing the sum by a sum of the values of the decision portions. Other ways of combining the neural network outputs to generate the system input are possible, e.g., by computing a measure of central tendency of the neural network outputs.

FIG. 3 is a flow diagram of an example process 300 for generating one or more neural network outputs from a system input. For convenience, the process 300 will be described as being performed by a system of one or more computers located in one or more locations. For example, an augmented neural network system, e.g., the augmented neural network system 100 of FIG. 1, appropriately programmed in accordance with this specification, can perform the process 300.

The system receives a system input (step 302). The system input is one input of a sequence of system inputs received by the system.

The system generates an initial neural network input from the system input (step 304). In implementations where the neural network is not augmented with an external memory, the system can provide the system input as the initial neural network input. In implementations where the neural network is augmented with an external memory, the system can combine, e.g., concatenate, the current read vector or vectors that have been read from the external memory by the memory interface subsystem with the system input to generate the initial neural network input.

The system processes the initial neural network input using the neural network to generate an initial neural network output from the system input (step 306). Depending on the implementation, the neural network can either be a feed-forward neural network, e.g., a convolutional neural network or another kind of deep feed-forward neural network, or a recurrent neural network, e.g., an LSTM neural network. If the neural network is a recurrent neural network, the recurrent neural network also uses the internal state of the recurrent neural network from the preceding neural network input processed by the neural network in processing the current neural network input to generate the neural network output. In some implementations, the neural network includes both recurrent and feed-forward layers.

In implementations where the neural network is augmented with an external memory, the system also reads, writes, and erases from the external memory in accordance with designated portions of the neural network output. Reading, writing, and erasing from the external memory is described below with reference to FIGS. 4-10.

The system determines, from the decision portion of the neural network output, whether or not to generate an additional neural network output for the system input (step 308). The system can make this determination from the decision portion of the neural network output in any of a variety of ways.

For example, the system can determine whether the value of the decision portion of the neural network output exceeds a threshold value and, if the value of the decision portion exceeds the threshold value, determine that no more additional neural network outputs should be generated for the system input.

As another example, the value of the decision portion may be configured to be constrained to a range between zero and one, either inclusive or exclusive. In this example, the system can treat the value of the decision portion as a probability. That is, the system can determine not to generate any more additional neural network outputs with a probability equal to the value of the decision portion and determine to generate an additional neural network output with a probability equal to one minus the value of the decision portion. If the value is not constrained to the range, the system can normalize the value and treat the normalized value as a probability.

If the system determines not to generate any more additional neural network outputs, the system proceeds to processing the next system input in the sequence (step 310). If the system input is the last system input in the sequence, the system outputs the generated sequence of system outputs for use for some immediate purpose or stores the sequence of outputs in an output data repository.

If the system determines to generate an additional neural network output, the system generates an additional neural network input (step 312). In implementations where the neural network is not augmented with an external memory, the system can again provide the system input as the additional neural network input. Alternatively, the system can provide a default input, e.g., an input vector of predetermined default values, as the additional neural network input.

In implementations where the neural network is augmented with an external memory, the system can combine the current read vector that has been read from the external memory, e.g., based on reading from the external memory in accordance with a read portion of the current neural network output, with the system input or the default input.

The system processes the additional neural network input using the neural network to generate an additional neural network output (step 314). Because the state of the neural network will generally be different when processing each additional neural network input than the state of the neural network when processing the initial neural network input or when processing each other additional neural network input, each additional neural network output will generally differ from each other additional neural network output and the initial neural network output. For example, in implementations where the neural network is augmented with an external memory, the current read vector being provided to the neural network as part of each neural network input will generally be different. As another example, when the neural network includes one or more recurrent layers, the internal state of the neural network when processing each of the neural network inputs will generally be different.

The system determines, from the decision portion of the neural network output, whether or not to generate an additional neural network output for the system input (returning to step 308).

In some implementations, the augmented neural network system can include multiple neural networks that each process each system input to generate a respective neural network output, with the appropriate portions of the neural network outputs generated by each network being combined to generate the system output for the system input. In these cases, the system can determine whether or not to generate an additional neural network output for the system input from the decision portions of each of the neural network inputs, e.g., by computing a measure of central tendency of the decision portions and then making the determination from the measure as described above.

The processes 200 and 300 can be performed for each system input in a sequence of system inputs to generate a sequence of system outputs for the sequence of system inputs. The sequence of system inputs can be a sequence for which the desired output, i.e., the output sequence that should be generated by the system for the input sequence, is not known. The system can also perform the processes 200 and 300 on inputs in a set of training data, i.e., a set of inputs for which the output that should be predicted by the system is known, in order to train the system, i.e., to determine trained values for the parameters of the neural network and, in implementations where the neural network is augmented with an external memory, any additional parameters of processes used in erasing, writing, and reading from the external memory. In implementations where the components of the system are entirely differentiable, e.g., when the system decides whether or not to generate an additional neural network input by treating the decision portion as a probability, the processes 200 and 300 can be performed repeatedly on inputs selected from a set of training data as part of a conventional machine learning training technique to train the neural network, e.g., a stochastic gradient descent with backpropagation through time training technique if the neural network is a recurrent neural network.

In some implementations, the objective function that is being optimized includes, in addition to one or more terms that penalize the system for generating incorrect system outputs, one or more terms that penalize the system for spending too much time processing in order to generate a system output. That is, the objective function includes one or more terms that increase the penalty for the system the more time the system takes to generate an output sequence for a given input sequence. The time can be measured, e.g., in terms of number of neural network outputs generated in processing the input sequence. Thus, by training the system using an objective function that offsets the penalty for incorrect system outputs with a penalty for spending too much time processing, the neural network can be trained not to generate excessive additional neural network outputs for any given system input, thereby reducing the increase in processing time and computing resources required for the system to process a given input sequence.

As described above, in some implementations the neural network is augmented with an external memory. A description of reading, writing, and erasing from the external memory follows.

FIG. 4 is a flow diagram of an example process 400 for generating a system output from a system input. For convenience, the process 400 will be described as being performed by a system of one or more computers located in one or more locations. For example, an augmented neural network system, e.g., the augmented neural network system 100 of FIG. 1, appropriately programmed in accordance with this specification, can perform the process 400.

The system receives a system input (step 402). The system input is one of a sequence of system inputs received by the system.

The system obtains a read data vector generated by reading from an external memory (step 404), e.g., the external memory 104 of FIG. 1. Generally, the read data vector was generated by the system by reading from the external memory during processing of the preceding input in the sequence of system inputs.

The system generates a neural network input by combining the system input and the data read from the external memory (step 406). For example, the system can concatenate the system input and the read data vector to generate the neural network input. For the first system input, the system can concatenate the system input with a pre-determined vector, e.g., a learned state of the neural network.

The system processes the neural network input using a neural network, e.g., the neural network 102 of FIG. 1, to generate a neural network output from the neural network input (step 408). Depending on the implementation, the neural network can either be a feed-forward neural network, e.g., a convolutional neural network or another kind of deep feed-forward neural network, or a recurrent neural network, e.g., an LSTM neural network. If the neural network is a recurrent neural network, the recurrent neural network also uses the internal state of the recurrent neural network from the preceding neural network input in the sequence in processing the current neural network input to generate the neural network output. In some implementations, the neural network includes both recurrent and feed-forward layers.

The system generates a system output for the system input from a system output portion of the neural network output (step 410). The system output portion of the neural network output is a predetermined portion of the neural network output that has been designated, e.g., by a system administrator, as the portion to be used to generate the system output, i.e., so that the same portion of the neural network output is used to generate the system output for each output generated by the neural network.

In some implementations, the system provides the system output portion as the system output for the system input. In some other implementations, however, the system applies one or more transformations to the system output portion in order to generate the system output. For example, the system output portion may be transformed into a command to control a robot or a different digital interface.

The system erases from the external memory using an erase portion of the neural network output (step 412). The erase portion of the neural network output is a predetermined portion of the neural network output that has been designated as the portion to be used in erasing from the external memory. In particular, in order to erase from the external memory, the system determines erasing weights using the erase portion of the neural network output. The erasing weights are memory access weights that include a respective weight for each location in the external memory and that define a distribution over the locations in the external memory.

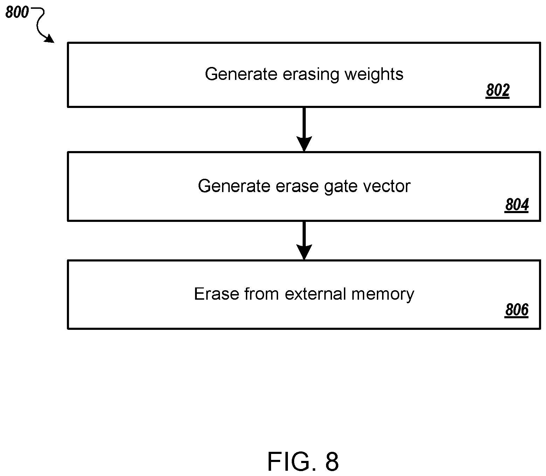

The system then erases from each location in the external memory in accordance with the erasing weights. Determining memory access weights, e.g., erasing weights, from a designated portion of a neural network output is described in more detail below with reference to FIG. 4. Erasing from the external memory in accordance with the erasing weights is described in more detail below with reference to FIG. 8.

The system writes to the external memory using a write portion of the neural network output (step 414). The write portion of the neural network output is a predetermined portion of the neural network output that has been designated as the portion to be used in writing to the external memory.

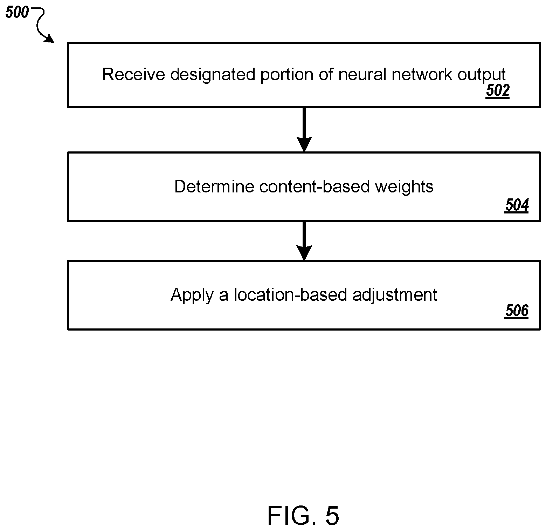

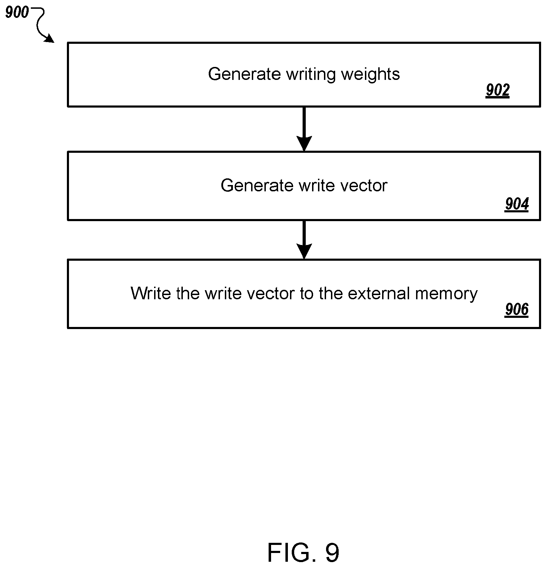

In particular, in order to write to the external memory, the system determines writing weights using a designated subportion of the write portion of the neural network output. In some implementations, the writing weights are the same as the erasing weights, i.e., the designated subportion of the write portion is the erase portion of the neural network output. In some other implementations, however, the designated subportion of the write portion is different from the erase portion. Determining memory access weights, e.g., writing weights, from a designated portion of a neural network output is described in more detail below with reference to FIG. 5. The system also determines a write vector to be written to the external memory from a different designated subportion of the write portion and then writes the write vector to the external memory in accordance with the writing weights. Determining the write vector and writing the write vector to the external memory is described below with reference to FIG. 9.

The system reads from the external memory using a read portion of the neural network output (step 416). The read portion of the neural network output is a predetermined portion of the neural network output that has been designated as the portion to be used in reading from the external memory.

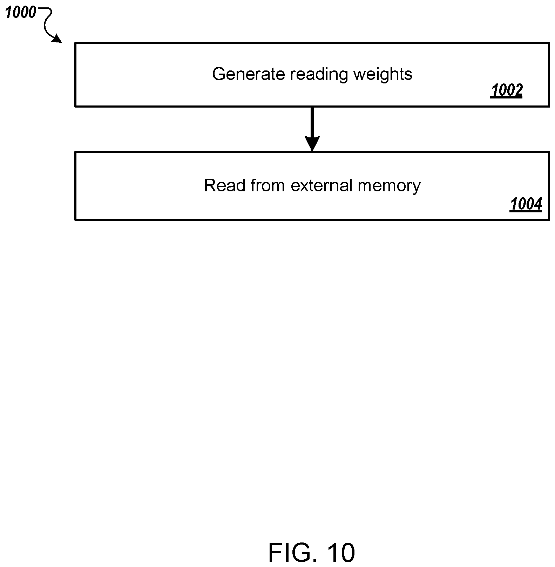

In particular, in order to read from the external memory, the system determines reading weights using the read portion of the neural network output and then reads from the locations in the external memory in accordance with the reading weights. Determining memory access weights, e.g., reading weights, from a designated portion of a neural network output is described in more detail below with reference to FIG. 5. Reading from the external memory is described below with reference to FIG. 10.

In some implementations, the system performs multiple erase, read, and write operations for a given system input. For example, the system can perform multiple sets that each include an erase operation, a read operation, and a write operation in parallel and independently of each other set of the operations. Additionally, as will be described in more detail below with reference to FIGS. 8-10, the system can use different memory access weights in performing each set of operations, e.g., because the system uses a different portion of the neural network output in computing each of the sets of memory access weights.

Additionally, the system can perform the erase, read, and write operations in any order. For example, in some implementations, the system erases, then writes, and then reads from the external memory. However, in other implementations, the system can perform these operations in a different order.

The process 400 can be performed for each system input in a sequence of system inputs to generate a sequence of system outputs for the sequence of system inputs. The sequence of system inputs can be a sequence for which the desired output, i.e., the output sequence that should be generated by the system for the input sequence, is not known. The system can also perform the process 400 on inputs in a set of training data, i.e., a set of inputs for which the output that should be predicted by the system is known, in order to train the system, i.e., to determine trained values for the parameters of the neural network and any additional parameters of processes used in erasing, writing, and reading from the external memory. Because the components of the system are entirely differentiable, the process 400 can be performed repeatedly on inputs selected from a set of training data as part of a conventional machine learning training technique to train the neural network, e.g., a stochastic gradient descent backpropagation training technique if the neural network is a recurrent neural network.

FIG. 5 is a flow diagram of an example process 500 for determining memory access weights from a designated portion of a neural network output. For convenience, the process 500 will be described as being performed by a system of one or more computers located in one or more locations. For example, an augmented neural network system, e.g., the augmented neural network system 100 of FIG. 1, appropriately programmed in accordance with this specification, can perform the process 500.

The system receives a designated portion of a neural network output (step 502). That is, if the memory access weights being determined by the system are erasing weights, the system receives the erasing portion of the neural network output, if the memory access weights being determined by the system are writing weights, the system receives the designated subportion of the write portion of the neural network output, and if the memory access weights being determined by the system are reading weights, the system receives the reading portion of the neural network output.

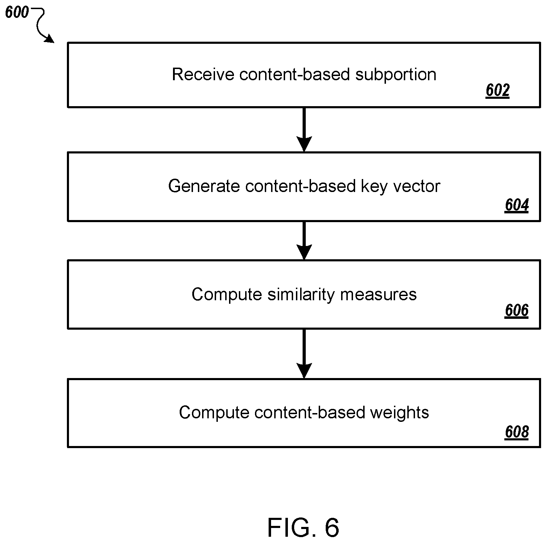

The system determines content-based weights from a content-based subportion of the designated portion (step 504). Generally, in order to determine the content-based weights, the system determines a content key vector from the content-based subportion. The system then compares the content key vector to the vectors stored in the locations in the external memory in order to determine the weights for the locations. Determining the content-based weights is described in more detail below with reference to FIG. 6.

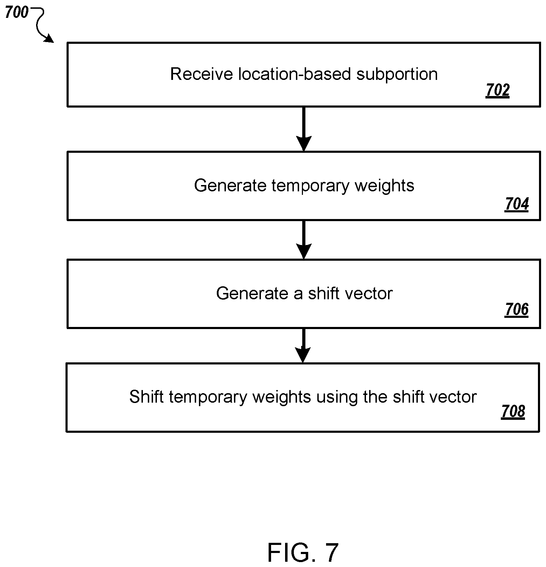

The system applies a location-based adjustment to the content-based weights to determine the memory access weights (step 506). Generally, the system determines a shift vector from a location-based subportion of the designated portion and then uses the shift vector to adjust the content-based weights in order to determine the memory access weights. Adjusting the content-based weights is described below with reference to FIG. 7.

FIG. 6 is a flow diagram of an example process 600 for generating content-based weights for locations in an external memory. For convenience, the process 600 will be described as being performed by a system of one or more computers located in one or more locations. For example, an augmented neural network system, e.g., the augmented neural network system 100 of FIG. 1, appropriately programmed in accordance with this specification, can perform the process 600.

The system receives a content-based subportion of a designated portion of the neural network output (step 602).

The system generates a content-based key vector from the content-based subportion (step 604). In some implementations, the system may use the content-based subportion as the content-based key vector. In some other implementations, the system applies one or more transformations to the content-based subportion in order to generate the content-based key vector. For example, the system may process the content-based subportion using a neural network, e.g., a multilayer perceptron (MLP) neural network, that is configured to receive the subportion and generate the content-based key vector.

The system computes similarity measures between the content-based key vector and the vectors stored in the external memory (step 606). That is, the system computes a respective similarity measure between the content-based key vector and each vector stored in the external memory. For example, the similarity measure may be a cosine similarity measure, with the similarity $K$ between the content-based key vector $\mathbf{k}(h,t)$ and a given vector $M(i,\bullet,t)$ located at the i-th location in the external memory $M$ satisfying:

$$K(\mathbf{k}(h,t),M(i,\bullet,t)) = \frac{\mathbf{k}(h,t) \bullet M(i,\bullet,t)}{\|\mathbf{k}(h,t)\|\|M(i,\bullet,t)\|}.$$

The system computes the content-based weights for the locations in the external memory using the similarity measures (step 608). Generally, the system computes the weights so that locations that have higher similarity measures with the content-based key vector are assigned higher weights. For example, the content-based weight for the i-th location in the external memory $M$ may satisfy:

$$w_c(i,h,t) = \frac{\exp(\beta(h,t)K(\mathbf{k}(h,t),M(i,\bullet,t)))}{\sum_{i'}\exp(\beta(h,t)K(\mathbf{k}(h,t),M(i',\bullet,t)))},$$

where $\beta(h,t)$ is a "key strength" value is a positive value derived from a designated portion of the neural network output and the sum is a sum over all of the locations in the external memory.

FIG. 7 is a flow diagram of an example process 700 for applying a location-based adjustment to content-based weights. For convenience, the process 700 will be described as being performed by a system of one or more computers located in one or more locations. For example, an augmented neural network system, e.g., the augmented neural network system 100 of FIG. 1, appropriately programmed in accordance with this specification, can perform the process 700.

The system receives a location-based subportion of a designated portion of the neural network output (step 702).

The system generates temporary weights from the content-based weights and the preceding weights generated by the system (step 704). Generally, the previous weights generated by the system are the memory access weights generated by the system during processing of the preceding system input. The system generates the temporary weights by combining the content-based weights and the preceding weights. For example, the temporary weights may be an interpolation of the content-based weights and the preceding weights, with the temporary weights $\tilde{w}(i,h,t+1)$ for a given location $i$ in the external memory for a $t+1$-th system input satisfying:

$$\tilde{w}(i,h,t+1) = (1 - g_i(h,t+1))w_c(i,h,t+1) + g_i(h,t+1)w(i,h,t),$$

where $g_i(h,t+1)$ is a gate output that is between zero and one is and is derived from a designated portion of the neural network output, $w_c(i,h,t+1)$ are the content-based weights for the $t-1$-th system input, and $w(i,h,t)$ are the memory access weights from the $t$-th system input.

The system generates a shift vector from the location-based subportion (step 706). In some implementations, the system may use the location-based subportion as the shift vector. In some other implementations, the system applies one or more transformations to the location-based subportion in order to generate the shift vector. For example, the system may process the location-based subportion using a neural network, e.g., an MLP neural network, that is configured to receive the subportion and generate the shift vector.

The system shifts the temporary weights using the shift vector to generate the memory access weights (step 708). In particular, the system applies a convolution, e.g., a circular convolution, to the temporary weights using the shift vector to generate the memory access weights. For example, the weight $w(i,h,t+1)$ for the location $i$ in the external memory may satisfy:

$$w(i,h,t+1) = \sum_{j=0}^{N-1} \widetilde{w}(j,h,t+1)s(i-j,h,t+1),$$

where all index arithmetic is computed modulo $N$, and where $s(i-j,h,t+1)$ is the shift vector for location $i$-$j$ in the memory.

FIG. 8 is a flow diagram of an example process 800 for erasing from an external memory in accordance with erasing weights. For convenience, the process 800 will be described as being performed by a system of one or more computers located in one or more locations. For example, an augmented neural network system, e.g., the augmented neural network system 100 of FIG. 1, appropriately programmed in accordance with this specification, can perform the process 800.

The system generates erasing weights (step 802). The system can generate the erasing weights as described above with reference to FIGS. 4-6.

The system generates an erase vector (step 804). In some implementations, the system may use a designated portion of the neural network output as the erase vector. In some other implementations, the system applies one or more transformations to the portion in order to generate the erase vector. For example, the system may process the portion using a neural network, e.g., a multilayer perceptron (MLP) neural network, that is configured to receive the portion and generate the erase vector.

The system erases from the external memory using the erasing weights and the erase gate vector (step 806). In particular, for a value $M(i,j,t)$ stored at vector element $j$ of a vector stored at location $i$ in the external memory, the system generates an erased value $\widetilde{M}(i,j,t+1)$ that satisfies:

$$\widetilde{M}(i,j,t+1) = M(i,j,t)\prod_{h=1}^{H}(1-w_e(i,h,t+1)g_e(j,h,t+1)),$$

where $w_e(i,h,t+1)$ is the erasing weight for the location $i$ and $g_e(j,h,t+1)$ is the erase vector.

In implementations where the system performs multiple erase operations for a given system input, e.g., in parallel as described above, each erase operation can be performed independently by performing the technique 800 with optionally different values for the erasing weights and the erase gate vectors. For example, each erase operation can be performed by using a different neural network with possibly different parameter values to generate the erase gate vector. Thus, the cumulative effect of the multiple erase operations being performed in parallel is multiplicative.

FIG. 9 is a flow diagram of an example process 900 for writing to an external memory in accordance with writing weights. For convenience, the process 900 will be described as being performed by a system of one or more computers located in one or more locations. For example, an augmented neural network system, e.g., the augmented neural network system 100 of FIG. 1, appropriately programmed in accordance with this specification, can perform the process 900.

The system generates writing weights (step 902). The system can generate the writing weights from a designated subportion of the writing output portion as described above with reference to FIGS. 4-6. As described above, in some implementations, the writing weights are the same as the erasing weights

The system generates a write vector from a different designated portion of the writing output portion (step 904). In some implementations, the system may use the different designated subportion as the write vector. In some other implementations, the system applies one or more transformations to the different designated subportion in order to generate the write vector. For example, the system may process the different designated subportion using a neural network, e.g., an MLP neural network, that is configured to receive the subportion and generate the write vector.

The system writes the write vector to the external memory using the writing weights (step 906). In particular, for a value $M(i,j,t)$ stored at vector element $j$ of a vector stored at location $i$ in the external memory, the system generates a value $M(i,j,t+1)$ that satisfies:

$$M(i,j,t+1) = M(i,j,t) + \sum_{h=1}^{H} w_w(i,h,t+1)v(j,h,t+1)),$$

where $w_w(i,h,t+1)$ is the writing weight for the location $i$ and $v(j,h,t+1)$ is the value at element $h$ of the write vector. In implementations where the write operation is performed after the erase operation, rather than modifying a value $M(i,j,t)$, the system can generate the value $M(i,j,t+1)$ by modifying the value $\widetilde{M}(i,j,t+1)$ generated by the erasing operation described above.

In implementations where the system performs multiple write operations for a given system input, e.g., in parallel as described above, each write operation can be performed independently by performing the technique 900 with optionally different values for the writing weights and the write vectors. For example, each write operation can be performed by using a different neural network with possibly different parameter values to generate the write vector. Thus, the cumulative effect of the multiple write operations being performed in parallel is additive.

FIG. 10 is a flow diagram of an example process 1000 for reading from an external memory in accordance with reading weights. For convenience, the process 1000 will be described as being performed by a system of one or more computers located in one or more locations. For example, an augmented neural network system, e.g., the augmented neural network system 100 of FIG. 1, appropriately programmed in accordance with this specification, can perform the process 1000.

The system generates reading weights (step 1002). The system can generate the reading weights from the reading output portion as described above with reference to FIGS. 5-7.

The system reads from locations in the external memory in accordance with the reading weights (step 1004). In particular, the system generates a read data vector by combining the value stored at each location in the external memory. That is, for a given element of the read data vector, the system computes a weighted average of each value stored in the external memory at that element, with the weight for each value being the reading weight for the corresponding location. For example, the value of the read vector at element *j v(j, h, t + 1)* may satisfy:

$$r(j,h,t+1) = \sum_{i=0}^{N-1} w_r(i,h,t+1)M(i,j,t+1)),$$

where $w_r(i,h,t + 1)$ is the reading weight for the location *i* and $M(i,j,t + 1)$ is the value at element *j* of the vector stored at location *i* in the memory.

In implementations where the system performs multiple read operations for a given system input, e.g., in parallel as described above, each read operation can be performed independently by performing the technique 1000 with optionally different values for the reading weights. In these implementations, the system can combine the read data vectors generated by each read operation, e.g., by concatenating the vectors, to form a final read data vector that is provided as part of the neural network input to the neural network.

Depending on the implementation, the system can maintain various degrees of persistence of the data stored in the external memory based on outputs received from the neural network. For example, in some implementations, the system re-sets the external memory after each sequence of system inputs has been fully processed by the system. As another example, in some implementations, the data stored in the external memory persists between input sequences. That is, the system does not delete any data from the external memory between sequences of system inputs. In these implementations, the system may reset the external memory after a given task assigned to the system is completed and before the system begins a different machine learning task. Alternatively, the system may maintain the external memory without deleting values even between tasks. Thus, while processing a current input sequence, the system may be able to leverage data stored in the memory while processing a previous input sequence or even while performing a previous machine learning task.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory program carrier for execution by, or to control the operation of, data processing apparatus. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. The computer storage medium can be a machine-readable storage device, a machine-readable storage substrate, a random or serial access memory device, or a combination of one or more of them.

The term "data processing apparatus" refers to data processing hardware and encompasses all kinds of apparatus, devices, and machines for processing data, including by way of example a programmable processor, a computer, or multiple processors or computers. The apparatus can also be or further include special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program (which may also be referred to or described as a program, software, a software application, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, subprograms, or portions of code. A computer program can be deployed to be executed on one computer or on multiple computers that are located at one site or distributed across multiple sites and interconnected by a communication network.

The processes and logic flows described in this specification can be performed by one or more programmable computers executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application-specific integrated circuit).

Computers suitable for the execution of a computer program include, by way of example, can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a relationship graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), e.g., the Internet.

The computing system can include clients and servers. A client and server are generally remote from each other and typically interact through a communication network. The relationship of client and server arises by virtue of computer programs running on the respective computers and having a client-server relationship to each other.

In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

The invention is defined in the appended claims. Embodiments of the invention are defined in the appended dependent claims.

In certain implementations, multitasking and parallel processing may be advantageous.

**Claims**

1. An augmented neural network system for processing a sequence of system inputs to generate a sequence of system outputs,
   the sequence of system inputs comprising a sequence of images or features that have been extracted from images and the sequence of system outputs comprising a sequence of scores for each of a set of object categories, with each score representing an estimated likelihood that the image contains an image of an object belonging to the category;
the augmented neural network system comprising:

a neural network, wherein the neural network is configured to receive neural network inputs and process each of the neural network inputs to generate a respective neural network output for each neural network input; and
a sequence processing subsystem, wherein the sequence processing subsystem is configured to perform operations comprising, for each of the system inputs in the sequence of system inputs:

receiving the system input;
generating an initial neural network input from the system input;
causing the neural network to process the initial neural network input to generate an initial neural network output for the system input; and
determining, from a first portion of the initial neural network output for the system input, whether or not to cause the neural network to generate one or more additional neural network outputs for the system input;

causing the neural network to generate one or more additional neural network outputs based on the determining.

2. The augmented neural network system of claim 1, the operations further comprising:
in response to determining not to cause the neural network to generate one or more additional neural network outputs for the system input, generating a system output for the system input from a second portion of the initial neural network output for the system input.

3. The augmented neural network system of any one of claims 1 or 2, the operations further comprising:
in response to determining to cause the neural network to generate one or more additional neural network outputs for the system input, causing the neural network to generate the one or more additional neural network outputs for the system input, wherein causing the neural network to generate each of the one or more additional neural network outputs for the system input comprises:

generating an additional neural network input;
causing the neural network to process the additional neural network input to generate the additional neural network output; and
determining, from a first portion of the additional neural network output, whether or not to cause the neural network to generate a further additional neural network output.

4. The augmented neural network system of claim 3, the operations further comprising:

in response to determining not to cause the neural network to generate a further additional neural network output, generating a system output for the system input from a second portion of a last additional neural network output generated by the neural network for the system input; and/or
in response to determining not to cause the neural network to generate a further additional neural network output, generating a system output for the system input from second portions of the initial neural network output and the one or more additional neural network outputs.

5. The augmented neural network system of claim 4, wherein generating the system output comprises:

determining a respective weight for the initial neural network output and for each of the additional neural network outputs from the first portions of the corresponding initial neural network output and the additional neural network outputs; and
combining the second portions of the initial neural network output and the additional neural network outputs in accordance with the respective weights.

6. The augmented neural network system of any one of claims 3-5, wherein generating the additional neural network input comprises generating the additional neural network input from the system input.

7. The augmented neural network system of any one of claims 3-5, wherein generating the additional neural network input comprises generating a default neural network input.

8. The augmented neural network system of any one of claims 1-7, wherein determining, from the first portion of the initial neural network output for the system input, whether or not to cause the neural network to generate one or more additional neural network outputs for the system input comprises:

determining a probability from the first portion of the initial neural network output; and
determining whether or not to cause the neural network to generate the one or more additional neural network outputs based on the probability.

9. The augmented neural network system of any one of claims 1-7, wherein determining, from the first portion of the initial neural network output for the system input, whether or not to cause the neural network to generate one or more additional neural network outputs for the system input comprises:

determining whether or not the first portion of the initial neural network output exceeds a threshold value; and
determining not to cause the neural network to generate the one or more additional neural network outputs when the first portion of the initial neural network output exceeds the threshold value.

10. A computer-implemented augmented neural network method for processing a sequence of system inputs to generate a sequence of system outputs by an augmented neural network system,
the sequence of system inputs comprising a sequence of images or features that have been extracted from images and the sequence of system outputs comprising a sequence of scores for each of a set of object categories, with each score representing an estimated likelihood that the image contains an image of an object belonging to the category;
the augmented neural network system comprising: a neural network, wherein the neural network is configured to receive neural network inputs and process each of the neural network inputs to generate a respective neural network output for each neural network input; and a sequence processing subsystem, wherein the sequence processing subsystem for each of the system inputs performs the steps of:

receiving the system input;
generating an initial neural network input from the system input;
causing a neural network to process the initial neural network input to generate an initial neural network output for the system input, wherein the neural network is configured to receive neural network inputs and process each of the neural network inputs to generate a respective neural network output for each neural network input; and
determining, from a first portion of the initial neural network output for the system input, whether or not to cause the neural network to generate one or more additional neural network outputs for the system input;

causing the neural network to generate one or more additional neural network outputs based on the determining.

11. The method of claim 10, further comprising:
in response to determining not to cause the neural network to generate one or more additional neural network outputs for the system input, generating a system output for the system input from a second portion of the initial neural network output for the system input.

12. The method of any one of claims 10 or 11, further comprising:

in response to determining to cause the neural network to generate one or more additional neural network outputs for the system input, causing the neural network to generate the one or more additional neural network outputs for the system input, wherein causing the neural network to generate each of the one or more additional neural network outputs for the system input comprises:

generating an additional neural network input;
causing the neural network to process the additional neural network input to generate the additional neural network output; and
determining, from a first portion of the additional neural network output, whether or not to cause the neural network to generate a further additional neural network output; and

in response to determining not to cause the neural network to generate a further additional neural network output, optionally generating a system output for the system input from a second portion of a last additional neural network output generated by the neural network for the system input; and/or

in response to determining not to cause the neural network to generate a further additional neural network output, optionally generating a system output for the system input from second portions of the initial neural network output and the one or more additional neural network outputs; and

wherein generating the system output optionally comprises:

determining a respective weight for the initial neural network output and for each of the additional neural network outputs from the first portions of the corresponding initial neural network output and the additional neural network outputs; and

combining the second portions of the initial neural network output and the additional neural network outputs in accordance with the respective weights.

13. The method of claim 12, wherein generating the additional neural network input comprises generating the additional neural network input from the system input; and/or wherein generating the additional neural network input comprises generating a default neural network input.

14. The method of any one of claims 10-13, wherein determining, from the first portion of the initial neural network output for the system input, whether or not to cause the neural network to generate one or more additional neural network outputs for the system input comprises:

determining a probability from the first portion of the initial neural network output; and

determining whether or not to cause the neural network to generate the one or more additional neural network outputs based on the probability; and/or

wherein determining, from the first portion of the initial neural network output for the system input, whether or not to cause the neural network to generate one or more additional neural network outputs for the system input comprises:

determining whether or not the first portion of the initial neural network output exceeds a threshold value; and

determining not to cause the neural network to generate the one or more additional neural network outputs when the first portion of the initial neural network output exceeds the threshold value.

15. A computer storage medium encoded with a computer program, the computer program comprising instructions that when executed by one or more computers cause the one or more computers to implement the augmented neural network method of any one of claims 10-14.

## Patentansprüche

1. Erweitertes neuronales Netzsystem zum Verarbeiten einer Folge von Systemeingaben, um eine Folge von Systemausgaben zu erzeugen,

wobei die Folge von Systemeingaben eine Folge von Bildern oder Merkmalen umfasst, die aus Bildern extrahiert worden sind, und die Folge von Systemausgaben eine Folge von Bewertungen für jede aus einer Menge von Objektkategorien umfasst, wobei jede Bewertung eine geschätzte Wahrscheinlichkeit darstellt, dass das Bild ein Bild eines zu der Kategorie gehörenden Objekts enthält;

wobei das erweiterte neuronale Netzsystem umfasst:

ein neuronales Netz, wobei das neuronale Netz dafür konfiguriert ist, Eingaben in das neuronale Netz zu empfangen und jede der Eingaben in das neuronale Netz zu verarbeiten, um für jede Eingabe in das neuronale Netz eine jeweilige Ausgabe des neuronalen Netzes zu erzeugen; und

ein Subsystem zur Folgeverarbeitung, wobei das Subsystem zur Folgeverarbeitung dafür konfiguriert ist, Operationen durchzuführen, die für jede der Systemeingaben in der Folge von Systemeingaben umfassen:

Empfangen der Systemeingabe;

Erzeugen einer anfänglichen Eingabe in das neuronale Netz aus der Systemeingabe;

Bewirken, dass das neuronale Netz die anfängliche Eingabe in das neuronale Netz verarbeitet, um eine anfängliche Ausgabe des neuronalen Netzes für die Systemeingabe zu erzeugen; und

Bestimmen aus einem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt;

auf dem Bestimmen beruhendes Bewirken, dass das neuronale Netz eine oder mehrere zusätzliche Ausgaben des neuronalen Netzes erzeugt.

2. Erweitertes neuronales Netzsystem nach Anspruch 1, wobei die Operationen ferner umfassen:
als Antwort auf das Bestimmen, nicht zu bewirken, dass das neuronale Netz eine oder mehrere zusätzliche Ausgaben des neuronalen Netzes für die Systemeingabe erzeugt, erfolgendes Erzeugen einer Systemausgabe für die Systemeingabe aus einem zweiten Abschnitt der anfänglichen Ausgabe des neuronalen Netzes für die Systemeingabe.

3. Erweitertes neuronales Netzsystem nach einem der Ansprüche 1 oder 2, wobei die Operationen ferner umfassen:
als Antwort auf das Bestimmen, zu bewirken, dass das neuronale Netz eine oder mehrere zusätzliche Ausgaben des neuronalen Netzes für die Systemeingabe erzeugt, erfolgendes Bewirken, dass das neuronale Netz die eine oder mehreren zusätzlichen Ausgaben des neuronalen Netzes für die Systemeingabe erzeugt, wobei das Bewirken, dass das neuronale Netz jede der einen oder mehreren zusätzlichen Ausgaben des neuronalen Netzes für die Systemeingabe erzeugt, umfasst:

Erzeugen einer zusätzlichen Eingabe in das neuronale Netz;
Bewirken, dass das neuronale Netz die zusätzliche Eingabe in das neuronale Netz verarbeitet, um die zusätzliche Ausgabe des neuronalen Netzes zu erzeugen; und
Bestimmen aus einem ersten Abschnitt der zusätzlichen Ausgabe des neuronalen Netzes, ob bewirkt werden soll oder nicht, dass das neuronale Netz eine weitere zusätzliche Ausgabe des neuronalen Netzes erzeugt.

4. Erweitertes neuronales Netz nach Anspruch 3, wobei die Operationen ferner umfassen:

als Antwort auf das Bestimmen, nicht zu bewirken, dass das neuronale Netz eine weitere zusätzliche Ausgabe des neuronalen Netzes erzeugt, erfolgendes Erzeugen einer Systemausgabe für die Systemeingabe aus einem zweiten Abschnitt einer letzten zusätzlichen Ausgabe des neuronalen Netzes, die durch das neuronale Netz für die Systemeingabe erzeugt wurde; und/oder
als Antwort auf das Bestimmen, nicht zu bewirken, dass das neuronale Netz eine weitere zusätzliche Ausgabe des neuronalen Netzes erzeugt, erfolgendes Erzeugen einer Systemausgabe für die Systemeingabe aus zweiten Abschnitten der anfänglichen Ausgabe des neuronalen Netzes und der einen oder mehreren zusätzlichen Ausgabe des neuronalen Netzes.

5. Erweitertes neuronales Netz nach Anspruch 4, wobei das Erzeugen der Systemausgabe umfasst:

Bestimmen einer jeweiligen Gewichtung für die anfängliche Ausgabe des neuronalen Netzes und für jedes der zusätzlichen Ausgaben des neuronalen Netzes aus den ersten Abschnitten der entsprechenden anfänglichen Ausgabe des neuronalen Netzes und der zusätzlichen Ausgaben des neuronalen Netzes; und
Kombinieren der zweiten Abschnitte der anfänglichen Ausgabe des neuronalen Netzes und der zusätzlichen Ausgaben des neuronalen Netzes gemäß den jeweiligen Gewichten.

6. Erweitertes neuronales Netzsystem nach einem der Ansprüche 3 bis 5, wobei das Erzeugen der zusätzlichen Eingabe in das neuronale Netz umfasst: Erzeugen der zusätzlichen Eingabe in das neuronale Netz aus der Systemeingabe.

7. Erweitertes neuronales Netzsystem nach einem der Ansprüche 3 bis 5, wobei das Erzeugen der zusätzlichen Eingabe in das neuronale Netz umfasst: Erzeugen einer Standardeingabe in das neuronale Netz.

8. Erweitertes neuronales Netzsystem nach einem der Ansprüche 1 bis 7, wobei das Bestimmen aus dem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt, umfasst:

Bestimmen einer Wahrscheinlichkeit aus dem ersten Abschnitt der anfänglichen Ausgabe des neuronalen Netzes; und
auf der Wahrscheinlichkeit beruhendes Bestimmen, ob bewirkt werden soll oder nicht, dass das neuronale Netz die eine oder mehreren zusätzlichen Ausgaben des neuronalen Netzes erzeugt.

9. Erweitertes neuronales Netzsystem nach einem der Ansprüche 1 bis 7, wobei das Bestimmen aus dem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt, umfasst:

Bestimmen, ob der erste Abschnitt der anfänglichen Ausgabe des neuronalen Netzes einen Schwellenwert überschreitet oder nicht; und
Bestimmen, nicht zu bewirken, dass das neuronale Netz die eine oder mehreren zusätzlichen Ausgaben des neuronalen Netzes erzeugt, wenn der erste Abschnitt der anfänglichen Ausgabe des neuronalen Netzes den Schwellenwert überschreitet.

10. Computerimplementiertes Verfahren für ein erweitertes neuronales Netz zur Verarbeitung einer Folge von Systemeingaben durch ein erweitertes neuronales Netzsystem, um eine Folge von Systemausgaben zu erzeugen, wobei die Folge von Systemeingaben eine Folge von Bildern oder Merkmalen umfasst, die aus Bildern extrahiert worden sind, und die Folge von Systemausgaben eine Folge von Bewertungen für jede aus einer Menge von Objektkategorien umfasst, worin jede Bewertung eine geschätzte Wahrscheinlichkeit darstellt, dass das Bild ein Bild eines zu der Kategorie gehörenden Objekts enthält;
wobei das erweiterte neuronale Netzsystem umfasst:

ein neuronales Netz, wobei das neuronale Netz dafür konfiguriert ist, Eingaben in das neuronale Netz zu empfangen und jede der Eingaben in das neuronale Netz zu verarbeiten, um für jede Eingabe in das neuronale Netz eine jeweilige Ausgabe des neuronalen Netzes zu erzeugen; und
ein Subsystem zur Folgeverarbeitung, wobei das Subsystem zur Folgeverarbeitung für jede der Systemeingaben die folgenden Schritte durchführt:

Empfangen der Systemeingabe;
Erzeugen einer anfänglichen Eingabe in das neuronale Netz aus der Systemeingabe;
Bewirken, dass ein neuronales Netz die anfängliche Eingabe in das neuronale Netz verarbeitet, um eine anfängliche Ausgabe des neuronalen Netzes für die Systemeingabe zu erzeugen, wobei das neuronale Netz dafür konfiguriert ist, Eingaben in das neuronale Netz zu empfangen und jede der Eingaben in das neuronale Netz zu verarbeiten, um für jede Eingabe in das neuronale Netz eine jeweilige Ausgabe des neuronalen Netzes zu erzeugen; und
Bestimmen aus einem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt;

auf dem Bestimmen beruhendes Bewirken, dass das neuronale Netz eine oder mehrere zusätzliche Ausgaben des neuronalen Netzes erzeugt.

11. Verfahren nach Anspruch 10, ferner umfassend:
als Antwort auf das Bestimmen, nicht zu bewirken, dass das neuronale Netz eine oder mehrere zusätzliche Ausgaben des neuronalen Netzes für die Systemeingabe erzeugt, erfolgendes Erzeugen einer Systemausgabe für die Systemeingabe aus einem zweiten Abschnitt der anfänglichen Ausgabe des neuronalen Netzes für die Systemeingabe.

12. Verfahren nach einem der Ansprüche 10 oder 11, ferner umfassend:

als Antwort auf das Bestimmen, zu bewirken, dass das neuronale Netz eine oder mehrere zusätzliche Ausgaben des neuronalen Netzes für die Systemeingabe erzeugt, erfolgendes Bewirken, dass das neuronale Netz die eine oder mehreren zusätzlichen Ausgaben des neuronalen Netzes für die Systemeingabe erzeugt, wobei das Bewirken, dass das neuronale Netz jede der einen oder mehreren zusätzlichen Ausgaben des neuronalen Netzes für die Systemeingabe erzeugt, umfasst:

Erzeugen einer zusätzlichen Eingabe in das neuronale Netz;
Bewirken, dass das neuronale Netz die zusätzliche Eingabe in das neuronale Netz verarbeitet, um die zusätzliche Ausgabe des neuronalen Netzes zu erzeugen; und
Bestimmen aus einem ersten Abschnitt der zusätzlichen Ausgabe des neuronalen Netzes, ob bewirkt werden soll oder nicht, dass das neuronale Netz eine weitere zusätzliche Ausgabe des neuronalen Netzes erzeugt; und

als Antwort auf das Bestimmen, nicht zu bewirken, dass das neuronale Netz eine weitere zusätzliche Ausgabe des neuronalen Netzes erzeugt, optional erfolgendes Erzeugen einer Systemausgabe für die Systemeingabe aus einem zweiten Abschnitt einer letzten zusätzlichen Ausgabe des neuronalen Netzes, die durch das neuronale Netz für die Systemeingabe erzeugt wurde; und/oder

als Antwort auf das Bestimmen, nicht zu bewirken, dass das neuronale Netz eine weitere zusätzliche Ausgabe des neuronalen Netzes erzeugt, optional erfolgendes Erzeugen einer Systemausgabe für die Systemeingabe aus zweiten Abschnitten der anfänglichen Ausgabe des neuronalen Netzes und der einen oder mehreren zusätzlichen Ausgabe des neuronalen Netzes; und
wobei das Erzeugen der Systemausgabe optional umfasst:

Bestimmen einer jeweiligen Gewichtung für die anfängliche Ausgabe des neuronalen Netzes und für jedes der zusätzlichen Ausgaben des neuronalen Netzes aus den ersten Abschnitten der entsprechenden anfänglichen Ausgabe des neuronalen Netzes und der zusätzlichen Ausgaben des neuronalen Netzes; und
Kombinieren der zweiten Abschnitte der anfänglichen Ausgabe des neuronalen Netzes und der zusätzlichen Ausgaben des neuronalen Netzes gemäß den jeweiligen Gewichten.

13. Verfahren nach Anspruch 12, wobei das Erzeugen der zusätzlichen Eingabe in das neuronale Netz umfasst: Erzeugen der zusätzlichen Eingabe in das neuronale Netz aus der Systemeingabe; und/oder wobei das Erzeugen der zusätzlichen Eingabe in das neuronale Netz umfasst: Erzeugen einer Standardeingabe in das neuronale Netz.

14. Verfahren nach einem der Ansprüche 10 bis 13, wobei das Bestimmen aus dem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt, umfasst:

Bestimmen einer Wahrscheinlichkeit aus dem ersten Abschnitt der anfänglichen Ausgabe des neuronalen Netzes; und
auf der Wahrscheinlichkeit beruhendes Bestimmen, ob bewirkt werden soll oder nicht, dass das neuronale Netz die eine oder mehreren zusätzlichen Ausgaben des neuronalen Netzes erzeugt; und/oder
wobei das Bestimmen aus dem ersten Abschnitt der anfänglichen Ausgabe des neuronalen Netzes für die Systemeingabe, ob bewirkt werden soll oder nicht, dass das neuronale Netz eine oder mehrere zusätzliche Ausgaben des neuronalen Netzes für die Systemeingabe erzeugt, umfasst:

Bestimmen, ob der erste Abschnitt der anfänglichen Ausgabe des neuronalen Netzes einen Schwellenwert überschreitet oder nicht; und
Bestimmen, nicht zu bewirken, dass das neuronale Netz die eine oder mehreren zusätzlichen Ausgaben des neuronalen Netzes erzeugt, wenn der erste Abschnitt der anfänglichen Ausgabe des neuronalen Netzes den Schwellenwert überschreitet.

15. Computerspeichermedium, codiert mit einem Computerprogramm, wobei das Computerprogramm Anweisungen umfasst, die, wenn sie durch einen oder mehrere Computer ausgeführt werden, bewirken, dass der eine oder die mehreren Computer das Verfahren für ein erweitertes neuronales Netz nach einem der Ansprüche 10 bis 14 implementieren.

**Revendications**

1. Système de réseau de neurones augmenté destiné à traiter une séquence d'entrées de système pour générer une séquence de sorties de système ;
la séquence d'entrées de système comprenant une séquence d'images ou de caractéristiques qui ont été extraites d'images, et la séquence de sorties de système comprenant une séquence de scores pour chacune parmi un ensemble de catégories d'objets, où chaque score représente une probabilité estimée que l'image contienne une image d'un objet appartenant à la catégorie ;
le système de réseau de neurones augmenté comprenant :

un réseau de neurones, dans lequel le réseau de neurones est configuré pour recevoir des entrées de réseau de neurones, et pour traiter chacune des entrées de réseau de neurones pour générer une sortie de réseau de neurones respective pour chaque entrée de réseau de neurones ; et

un sous-système de traitement de séquence, dans lequel le sous-système de traitement de séquence est configuré pour mettre en œuvre des opérations comprenant, pour chacune des entrées de système dans la séquence d'entrées de système, les étapes consistant à :

recevoir l'entrée de système ;
générer une entrée de réseau de neurones initiale à partir de l'entrée de système ;
amener le réseau de neurones à traiter l'entrée de réseau de neurones initiale pour générer une sortie de réseau de neurones initiale pour l'entrée de système ; et
déterminer, à partir d'une première partie de la sortie de réseau de neurones initiale pour l'entrée de système, s'il convient d'amener ou non le réseau de neurones à générer une ou plusieurs sorties de réseau de neurones supplémentaires pour l'entrée de système ;

amener le réseau de neurones à générer une ou plusieurs sorties de réseau de neurones supplémentaires sur la base de l'étape de détermination.

2. Système de réseau de neurones augmenté selon la revendication 1, dans lequel les opérations comprennent en outre l'étape consistant à :
en réponse à une détermination selon laquelle il convient de ne pas amener le réseau de neurones à générer une ou plusieurs sorties de réseau de neurones supplémentaires pour l'entrée de système, générer une sortie de système pour l'entrée de système à partir d'une seconde partie de la sortie de réseau de neurones initiale pour l'entrée de système.

3. Système de réseau de neurones augmenté selon l'une quelconque des revendications 1 ou 2, dans lequel les opérations comprennent en outre l'étape consistant à :
en réponse à une détermination selon laquelle il convient d'amener le réseau de neurones à générer une ou plusieurs sorties de réseau de neurones supplémentaires pour l'entrée de système, amener le réseau de neurones à générer les une ou plusieurs sorties de réseau de neurones supplémentaires pour l'entrée de système, dans lequel l'étape consistant à amener le réseau de neurones à générer chacune des une ou plusieurs sorties de réseau de neurones supplémentaires pour l'entrée de système comprend les étapes consistant à :

générer une entrée de réseau de neurones supplémentaire ;
amener le réseau de neurones à traiter l'entrée de réseau de neurones supplémentaire pour générer la sortie de réseau de neurones supplémentaire ; et
déterminer, à partir d'une première partie de la sortie de réseau de neurones supplémentaire, s'il convient ou non d'amener le réseau de neurones à générer une autre sortie de réseau de neurones supplémentaire.

4. Système de réseau de neurones augmenté selon la revendication 3, dans lequel les opérations comprennent en outre les étapes consistant à :

en réponse à une détermination selon laquelle il convient de ne pas amener le réseau de neurones à générer une autre sortie de réseau de neurones supplémentaire, générer une sortie de système pour l'entrée de système à partir d'une seconde partie d'une dernière sortie de réseau de neurones supplémentaire générée par le réseau de neurones pour l'entrée de système ; et/ou
en réponse à une détermination selon laquelle il convient de ne pas amener le réseau de neurones à générer une autre sortie de réseau de neurones supplémentaire, générer une sortie de système pour l'entrée de système à partir de secondes parties de la sortie de réseau de neurones initiale et des une ou plusieurs sorties de réseau de neurones supplémentaires.

5. Système de réseau de neurones augmenté selon la revendication 4, dans lequel l'étape de génération de la sortie de système comprend les étapes consistant à :

déterminer un poids respectif pour la sortie de réseau de neurones initiale et pour chacune des sorties de réseau de neurones supplémentaires à partir des premières parties de la sortie de réseau de neurones initiale correspondante et des sorties de réseau de neurones supplémentaires ; et
combiner les secondes parties de la sortie de réseau de neurones initiale et les sorties de réseau de neurones supplémentaires conformément aux poids respectifs.

6. Système de réseau de neurones augmenté selon l'une quelconque des revendications 3 à 5, dans lequel l'étape de génération de l'entrée de réseau de neurones supplémentaire comprend l'étape de génération de l'entrée de réseau de neurones supplémentaire à partir de l'entrée de système.

7. Système de réseau de neurones augmenté selon l'une quelconque des revendications 3 à 5, dans lequel l'étape de génération de l'entrée de réseau de neurones supplémentaire comprend l'étape de génération d'une entrée de réseau de neurones par défaut.

8. Système de réseau de neurones augmenté selon l'une quelconque des revendications 1 à 7, dans lequel l'étape consistant à déterminer, à partir de la première partie de la sortie de réseau de neurones initiale pour l'entrée de système, s'il convient ou non d'amener le réseau de neurones à générer une ou plusieurs sorties de réseau de neurones supplémentaires pour l'entrée de système, comprend les étapes consistant à :

déterminer une probabilité à partir de la première partie de la sortie de réseau de neurones initiale ; et
déterminer s'il convient ou non d'amener le réseau de neurones à générer les une ou plusieurs sorties de réseau de neurones supplémentaires, sur la base de la probabilité.

9. Système de réseau de neurones augmenté selon l'une quelconque des revendications 1 à 7, dans lequel l'étape consistant à déterminer, à partir de la première partie de la sortie de réseau de neurones initiale pour l'entrée de système, s'il convient ou non d'amener le réseau de neurones à générer une ou plusieurs sorties de réseau de neurones supplémentaires pour l'entrée de système, comprend les étapes consistant à :

déterminer si la première partie de la sortie de réseau de neurones initiale dépasse ou ne dépasse pas une valeur seuil ; et
déterminer qu'il convient de ne pas amener le réseau de neurones à générer les une ou plusieurs sorties de réseau de neurones supplémentaires lorsque la première partie de la sortie de réseau de neurones initiale dépasse la valeur seuil.

10. Procédé de réseau de neurones augmenté mis en œuvre par ordinateur pour traiter une séquence d'entrées de système pour générer une séquence de sorties de système par le biais d'un système de réseau de neurones augmenté ;
la séquence d'entrées de système comprenant une séquence d'images ou de caractéristiques qui ont été extraites d'images, et la séquence de sorties de système comprenant une séquence de scores pour chacune parmi un ensemble de catégories d'objets, où chaque score représente une probabilité estimée que l'image contienne une image d'un objet appartenant à la catégorie ;
le système de réseau de neurones augmenté comprenant :

un réseau de neurones, dans lequel le réseau de neurones est configuré pour recevoir des entrées de réseau de neurones, et pour traiter chacune des entrées de réseau de neurones pour générer une sortie de réseau de neurones respective pour chaque entrée de réseau de neurones ; et
un sous-système de traitement de séquence, dans lequel le sous-système de traitement de séquence, pour chacune des entrées de système, met en œuvre les étapes consistant à :

recevoir l'entrée de système ;
générer une entrée de réseau de neurones initiale à partir de l'entrée de système ;
amener un réseau de neurones à traiter l'entrée de réseau de neurones initiale pour générer une sortie de réseau de neurones initiale pour l'entrée de système, dans lequel le réseau de neurones est configuré pour recevoir des entrées de réseau de neurones et pour traiter chacune des entrées de réseau de neurones pour générer une sortie de réseau de neurones respective pour chaque entrée de réseau de neurones ; et
déterminer, à partir d'une première partie de la sortie de réseau de neurones initiale pour l'entrée de système, s'il convient d'amener ou non le réseau de neurones à générer une ou plusieurs sorties de réseau de neurones supplémentaires pour l'entrée de système ;

amener le réseau de neurones à générer une ou plusieurs sorties de réseau de neurones supplémentaires sur la base de l'étape de détermination.

11. Procédé selon la revendication 10, comprenant en outre l'étape consistant à :
en réponse à une détermination selon laquelle il convient de ne pas amener le réseau de neurones à générer une ou plusieurs sorties de réseau de neurones supplémentaires pour l'entrée de système, générer une sortie de système pour l'entrée de système à partir d'une seconde partie de la sortie de réseau de neurones initiale pour l'entrée de système.

**12.** Procédé selon l'une quelconque des revendications 10 ou 11, comprenant en outre l'étape consistant à :

en réponse à une détermination selon laquelle il convient d'amener le réseau de neurones à générer une ou plusieurs sorties de réseau de neurones supplémentaires pour l'entrée de système, amener le réseau de neurones à générer les une ou plusieurs sorties de réseau de neurones supplémentaires pour l'entrée de système, dans lequel l'étape consistant à amener le réseau de neurones à générer chacune des une ou plusieurs sorties de réseau de neurones supplémentaires pour l'entrée de système comprend les étapes consistant à :

générer une entrée de réseau de neurones supplémentaire ;
amener le réseau de neurones à traiter l'entrée de réseau de neurones supplémentaire pour générer la sortie de réseau de neurones supplémentaire ; et
déterminer, à partir d'une première partie de la sortie de réseau de neurones supplémentaire, s'il convient ou non d'amener le réseau de neurones à générer une autre sortie de réseau de neurones supplémentaire ; et
en réponse à une détermination selon laquelle il convient de ne pas amener le réseau de neurones à générer une autre sortie de réseau de neurones supplémentaire, générer facultativement une sortie de système pour l'entrée de système à partir d'une seconde partie d'une dernière sortie de réseau de neurones supplémentaire générée par le réseau de neurones pour l'entrée de système ; et/ou

en réponse à une détermination selon laquelle il convient de ne pas amener le réseau de neurones à générer une autre sortie de réseau de neurones supplémentaire, générer facultativement une sortie de système pour l'entrée de système à partir de secondes parties de la sortie de réseau de neurones initiale et des une ou plusieurs sorties de réseau de neurones supplémentaires ; et
dans lequel l'étape de génération de la sortie de système comprend facultativement les étapes consistant à :

déterminer un poids respectif pour la sortie de réseau de neurones initiale et pour chacune des sorties de réseau de neurones supplémentaires à partir des premières parties de la sortie de réseau de neurones initiale correspondante et des sorties de réseau de neurones supplémentaires ; et
combiner les secondes parties de la sortie de réseau de neurones initiale et les sorties de réseau de neurones supplémentaires conformément aux poids respectifs.

**13.** Procédé selon la revendication 12, dans lequel l'étape de génération de l'entrée de réseau de neurones supplémentaire comprend l'étape consistant à générer l'entrée de réseau de neurones supplémentaire à partir de l'entrée de système ; et/ou dans lequel l'étape de génération de l'entrée de réseau de neurones supplémentaire comprend l'étape consistant à générer une entrée de réseau de neurones par défaut.

**14.** Procédé selon l'une quelconque des revendications 10 à 13, dans lequel l'étape consistant à déterminer, à partir de la première partie de la sortie de réseau de neurones initiale pour l'entrée de système, s'il convient ou non d'amener le réseau de neurones à générer une ou plusieurs sorties de réseau de neurones supplémentaires pour l'entrée de système comprend les étapes consistant à :

déterminer une probabilité à partir de la première partie de la sortie de réseau de neurones initiale ; et
déterminer s'il convient ou non d'amener le réseau de neurones à générer les une ou plusieurs sorties de réseau de neurones supplémentaires, sur la base de la probabilité ; et/ou
dans lequel l'étape consistant à déterminer, à partir de la première partie de la sortie de réseau de neurones initiale pour l'entrée de système, s'il convient ou non d'amener le réseau de neurones à générer une ou plusieurs sorties de réseau de neurones supplémentaires pour l'entrée de système, comprend les étapes consistant à :

déterminer si la première partie de la sortie de réseau de neurones initiale dépasse ou non une valeur seuil ; et
déterminer qu'il convient de ne pas amener le réseau de neurones à générer les une ou plusieurs sorties de réseau de neurones supplémentaires lorsque la première partie de la sortie de réseau de neurones initiale dépasse la valeur seuil.

**15.** Support de stockage informatique codé avec un programme informatique, le programme informatique comprenant des instructions qui, lorsqu'elles sont exécutées par un ou plusieurs ordinateurs, amènent les un ou plusieurs ordinateurs à mettre en œuvre le procédé de réseau de neurones augmenté selon l'une quelconque des revendications 10 à 14.

Neural Network 102

$o_1$

$o_2$

$s$

Sequence Processing Subsystem 108

$r$

Memory Interface Subsystem 106

$x$

$y$

$r$

$w$

$e$

External Memory 104

Augmented Neural Network System 100

FIG. 1

200

```
┌─────────────────────────────────────────────────────────┐
│                                                           │
│           Receive a sequence of system inputs             │
│                                                      202  │
└─────────────────────────────────────────────────────────┘
                            │
                            ▼
┌─────────────────────────────────────────────────────────┐
│                                                           │
│   Generate one or more neural network outputs for each of │
│                    the system inputs                 204  │
└─────────────────────────────────────────────────────────┘
                            │
                            ▼
┌─────────────────────────────────────────────────────────┐
│                                                           │
│  Generate a respective system output for each system input│
│                                                      206  │
└─────────────────────────────────────────────────────────┘
```

FIG. 2

300

Receive system input

302

Generate an initial neural network input from the system input

304

Process the initial neural network input

306

N ← Generate additional neural network output?

308

→ Y

Proceed to processing next system input

310

Generate additional neural network input

312

Process additional neural network input

314

FIG. 3

400

Receive a system input

*402*

Obtain read data vector

*404*

Generate a neural network input

*406*

Process the neural network input using a neural network to generate a neural network output

*408*

Generate a system output for the system input from a system output portion

*410*

Erase from the external memory

*412*

Write to the external memory

*414*

Read from the external memory

*416*

FIG. 4

500

Receive designated portion of neural network output

_502_

Determine content-based weights

_504_

Apply a location-based adjustment

_506_

FIG. 5

*600*

Receive content-based subportion

*602*

Generate content-based key vector

*604*

Compute similarity measures

*606*

Compute content-based weights

*608*

FIG. 6

*700*

```
+---------------------------------------------------+
|                                                   |
|        Receive location-based subportion          |
|                                              702  |
+---------------------------------------------------+
                        |
                        v
+---------------------------------------------------+
|                                                   |
|           Generate temporary weights              |
|                                              704  |
+---------------------------------------------------+
                        |
                        v
+---------------------------------------------------+
|                                                   |
|             Generate a shift vector               |
|                                              706  |
+---------------------------------------------------+
                        |
                        v
+---------------------------------------------------+
|                                                   |
|     Shift temporary weights using the shift vector|
|                                              708  |
+---------------------------------------------------+
```

FIG. 7

*800*

| Generate erasing weights | |
|---|---|
| | *802* |

| Generate erase gate vector | |
|---|---|
| | *804* |

| Erase from external memory | |
|---|---|
| | *806* |

FIG. 8

900

```
┌─────────────────────────────────────────────────┐
│         Generate writing weights                │
│                                         902     │
└─────────────────────────────────────────────────┘
                        │
                        ▼
┌─────────────────────────────────────────────────┐
│          Generate write vector                  │
│                                         904     │
└─────────────────────────────────────────────────┘
                        │
                        ▼
┌─────────────────────────────────────────────────┐
│   Write the write vector to the external memory │
│                                         906     │
└─────────────────────────────────────────────────┘
```

FIG. 9

*1000*

| Generate reading weights |
| :--- |
| *1002* |

| Read from external memory |
| :--- |
| *1004* |

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• *Sequence Transduction with Recurrent Neural Networks,* 14 November 2012